# EUROPEAN PATENT SPECIFICATION

(11) **EP 0 339 509 B1**
(45) Date of publication and mention of the grant of the patent: **11.01.1995**
(21) Application number: 89107247.2
(22) Date of filing: 21.04.1989
(51) Int. Cl.: C11B 1/10, C11B 11/00

(54) **Process for extracting lipid (cane lipid) from sugarcane**
Verfahren zum Extrahieren von Lipiden aus Zuckerrohr
Procédé d'extraction de lipides de canne à sucre

(30) Priority: 23.04.1988 JP 99342/88
(43) Date of publication of application: 02.11.1989
(73) Proprietor: DAIICHI SEITO KABUSHIKI KAISHA, Itoman-shi Okinawa-ken (JP)
(72) Inventor: Miyagi, Sadao, Shimaziri-gun Okinawa-ken (JP); Ohshiro, Kenichi, Shimaziri-gun Okinawa-ken (JP); Sakugawa, Akio, Ginowan-shi Okinawa-ken (JP)
(74) Representative: VOSSIUS & PARTNER

(56) References cited:
- FR-A- 2 401 241
- GB-A- 712 048
- US-A- 2 009 522
- US-A- 2 449 107
- US-A- 2 456 641
- US-A- 2 456 661
- US-A- 2 662 907
- US-A- 3 921 258

## Description

This invention relates to a method of separation/recovery of cane lipids contained in cane molasses by extracting the same with a lower alcohol.

Cane lipid which is present in the cane bark is a whitish waxy substance assumed to be a protection for the bark surface. As the consumption of natural waxes like carnauba wax and candida wax is increasing in various areas such as for lubrication office automation machineries and devices, as car wax, and in cosmetic manufacture, there is a shortage of supplies since these substances are collected in far away and isolated areas such as the inner areas along the Amazon River or deserts in Mexico. The above mentioned cane lipid (or cane wax) is attracting attention as a substitute supply source for them.

As cane lipid is contained in the cane bark surface, it has heretofore been extracted from the cane bark (e.g. the method of JP-A-59-53427) or from the lees of squeezed cane (hereinafter referred to as "bagasse").

It is said that as early as in the World War I cane lipid was extracted from bagasse using such solvents as benzene and toluene in the Republic of South Africa and Java. However, the practice is said to have been abandoned after the war because the recovery rate of the solvent was low and there was substantially no way for recycling the bagasse after extraction.

It was assumed that owing to the improved performance of clarifier, cane lipid in the squeezed cane juice would mostly adhere to the filter cake in the step for clarifying cane juice and hardly remain in the clarified juice. From around 1960, therefore, extraction of cane lipid from the filter cake was put to practice on an industrial scale in Cuba and Australia. This method was also found defective as in the case of bagasse in that the recovery rate of solvents such as benzene and toluene is low or that the filter cake after receovery of the lipid has substantially no usage. This method was additionally disadvantageous in view of economy because the filter cake spoils so easily as in one day and the operation will be very limited in duration and season. The manufacture was hence totally discontinued by around 1980.

There has been no reference in the past up to the present either in literatures or reports on actual practices, the idea or attempt of recovering cane wax from the cane juice in the post-process of cane juice clarification.

The use of bagasse or filter cake as a material as mentioned above in extracting cane lipid is uneconomical because operation of the plant would be limited due to seasonalness of the material and large-scaled machines and equipments would have to remain unused for some time. Easy-to-store and inexpensive materials which can be used irrespective of the season are therefore required.

It is desirable that there be a further use for the raw material after extraction of cane lipid, and the resultant product should preferably be added with an increased value (as impurity, i.e. cane lipid, is eliminated).

Further, as sugar cane products may be used as food, technology for sugar cane should warrant safety to humans and pollution-free wastes at all times .

Upon comprehensive investigation on the above, the inventors of the present application discovered that the content of cane lipid is high in waste molasses of sugar cane, waste molasses from a sugar refinery, or waste fermentation liquid obtained from such molasses after they were used in liquid culture, particularly in waste molasses of sugar cane whose content is as high as ca. 6 times that of dark brown sugar, that they can all be stored with ease, and that they are inexpensive and highly economical.

However, since these all contain glucides, amino acids and organic acids which can be recycled, solvents such as benzene, toluene and chloroform which advantageously dissolve the lipid but not glucides cannot be used because they are toxic to humans and make it difficult to recycle the waste materials after extraction. Lower alcohols, particularly ethanol which is used in food, deserve attention as a prospective solvent. However, since lower alcohols dissolve both cane lipid and glucides, it was substantially impossible to isolate and recover these two substances efficiently by the prior art.

The inventors made repeated studies to solve the above mentioned problems, and discovered the following as will be described in detail in Example II. When an alcohol-treated solution of molasses is so adjusted that the concentration of said alcohol would be in respective stages between 90 Vol% and 15 Vol% in the alkaline region, left to cool, heated to 45°C ± 10°C, and left standing at 20°C ± 15°C;
(1) a large quantity of pigments (including black melanoidine pigments which cannot be removed by the activated-sludge process) well aggregate and sediment when the alcohol concentration is 90 - 60 Vol%,
(2) a large quantity of salts (calcium salt, aconitic acid salt, etc.) precipitate and sediment when the alcohol concentration is 60 - 50 Vol%, and
(3) cane lipid precipitates and sediments efficiently when the alcohol concentration is 50 - 15 Vol%.
These findings are utterly new, and the inventors succeeded in extracting cane lipid efficiently from waste molasses on the basis of the above findings.

The present invention includes the following processes.
(1) Process for extracting cane lipid from cane molasses comprising the following steps:
   (a) alkali is added to cane molasses to adjust its pH between 8.0 and 12.5.
   (b) a lower alcohol is added to the mixture so that the alcohol concentration would be between 85 and 60 Vol% while the mixture is heated to 60°C ± 10°C. The precipitate is filtered to obtain a clarified liquid.
   (c) Alcohol is separated and removed from the clarified liquid so that the alcohol concentration would be 50 - 15 Vol%.
   (d) The liquid is heated to 45°C ± 10°C and then allowed to stand at 20°C ± 15°C to precipitate cane lipid.
   (e) The precipitated cane lipid is recovered routinely by isolation or filtration.
(2) Between the steps (b) and (c) of the process (1) above, an additional step may be inserted wherein alcohol is removed from the clarified liquid obtained in step (b) to adjust the alcohol concentration of said liquid to 65 - 55 Vol%, the mixture is heated to 45°C ± 10°C and then allowed to stand at 20°C ± 15°C to precipitate and remove salts from the liquid such as calcium salts and aconitic acid salts.
(3) The processes (1) and (2) wherein the filtrate obtained by adding carbon dioxide to saturation to the mixture of the clarified liquid obtained in step (b) of the process (1) and the reprocessed solution of sludge produced in step (b) of the same process (clear liquid obtained by dissolving the aggregated precipitate produced in the process (1) in alcohol and filtering the same) to adjust its pH in a neutral or weakly alkaline region and filtering the same is used in step (c) of the process (1).
(4) The processes (1) through (3) wherein the concentrated residue obtained by ultrafiltration of waste fermentation liquid containing waste molasses from sugar refineries or cane molasses and of pressed cane juice is used instead of cane molasses.

Suitable alkali includes, without limitation, calcium hydroxide and caustic soda. Methanol, ethanol, propanol and butanol are preferable as lower alcohol, but the present invention is in no way limited to them. Ethanol is optimal in view of toxicity.

For adjustment of the alcohol concentration in step (c) and thereafter, a part of the alcohol in the object solution may be removed, or the alcohol may be removed totally first and then a suitable amount of the alcohol may be added anew.

When adjusting the pH of the object molasses to alkalinity in step (a) of the present invention, a pH around 12 is most desirable as will be described later in detail. When a large amount of alcohol is added under heating to these molasses so that the alcohol concentration would be 90 - 60 Vol%, a large amount of pigments contained in the object liquid become aggregated and precipitated, increasing the purity of sugar and clarity. These pigments include melanoidine pigments which cannot be removed by the activated-sludge process and other liquid clarification processes. As these are mainly removed, implementation of this invention will help prevent pollution, thus serving double purpose.

Steps (c) and (d) are the core of the present invention. When the alcohol concentration is adjusted to 50 -15 Vol%, most of the cane lipid contained precipitate and sediment. The rest remains in the liquid as fine particles, which are recovered using pulp fiber mats or polypropylene adsorbent films.

The precipitated cane lipid is isolated by separatory funnels or recovered by filtration, which may be performed routinely.

As a variation of the invention of the present application, it is useful to add a desalination step after decolorization by changing the alcohol concentration in two stages, i.e. 90 - 65% Vol% and 65 - 55 Vol%. It is effective to carry out the desalination step between steps (b) and (c).

In order to recover a small amount of cane lipid contained in the aggregated precipitates (sludge) formed in step (b), it is also useful to dissolve the sludge in alcohol before filtration and mix the reprocessed solution obtained with the initially clarified liquid. It is desirable to add carbonic acid to the clarified mixture liquid and to adjust the pH to be neutral or weakly alkaline before filtration.

As has been described in the foregoing, the present invention wherein cane lipid is extracted from waste molasses with alcohol allows an industrial-scale extraction of cane lipid from sugar cane, which has heretofore entailed difficulties. Moreover, the method is highly economical because inexpensive alcohols of below 90 Vol% can be used. This invention is quite outstanding in that it not only prevents waste water from molasses processing plants from polluting the environment but also enables recycling of the raw material molasses with its impurity, cane lipid, being removed and thus ensuring safety to humans.

FIG. 1 is a graph showing the decolorization rate and increase in pure sugar at different levels of pH at alkalinization of waste molasses described in Example 1. In the drawing, the broken line shows the decolorization rate and the solid line the increase in pure sugar.

FIG. 2 shows precipitation, aggregation and sedimentation at different ethanol concentrations of the ethanol/sugar mixture described in Example 2.

The invention will now be described below by way of examples.

### Example 1

580 ml (824.5 g) of waste molasses from cane sugar factory was added with 511 ml of water to obtain 1,091 ml of diluted solution. 500 ml (378 g) of the solution was collected, calcium hydroxide was added to adjust its pH to 12.0, the mixture was heated to 60°C, mixed with 6 times the above amount of 80% ethanol (3,000 ml) and stirred. The resultant aggregated precipitates were filtrated under reduced pressure with No. 2 filter paper to obtain a clarified liquid.

320 g of sludge obtained were further mixed with twice the above amount of 60 Vol% ethanol, stirred and filtrated under reduced pressure to obtain the reprocessed solution of the sludge. This was mixed with said filtrate, carbon dioxide was added to saturation to adjust its pH to 8.0 and filtrated with No. 2 filter paper to remove the calcium carbonate produced. The alcohol was totally removed from the filtrate thus obtained using a rotary evaporator, and 195.4 g of decolorized clear syrup of Brix 53.8 was obtained. 134 ml (167.3 g) of the syrup was collected, 250 ml of 80 Vol% ethanol were added, and further 116 ml of water were added to obtain 500 ml of precisely 40 Vol% ethanol/sugar mixture solution. The mixture solution was heated to 50°C, placed in a 500 ml measuring cylinder, and allowed to stand for 4 hours at room temperature, whereby 70 ml of precipitate was formed at the bottom of the cylinder. 400 ml of the supernatant were carefully removed by suction using a rubber tube, and the remaining 100 ml of the solution and the precipitate was filtrated with No. 131 filter paper, and vacuum dried. It weighed 1.93 g, which is equivalent to 2.1% of the total solid content or 0.51% of 378 g of the stock molasses. When dissolved in chloroform, the dried substance easily dissolved and was confirmed to be cane lipid.

Further, after chloroform was distilled off, 100 ml of acetone was added and dissolved. The insoluble substance was filtrated with No. 2 filter paper. When the acetone was removed from the filtrate under heating, 0.444 g of white crystals was recovered, which was confirmed to be equivalent to 23% of the total amount of dry cane lipid previously recovered.
In the meantime, calcium hydroxide was added to 500 ml (378 g) of the remaining Brix-adjusted solution to adjust its pH to 9.0, heated to 50°C and similarly mixed with 6 times the above amount of 80 Vol% ethanol. The resultant precipitates of dark brown melanoidine were filtrated with No. 2 filter paper. To filtrate 1N H₂SO₄ was added to adjust its pH to 7.0, and the mixture was filtrated with No. 2 filter paper. The alcohol was removed from the alcohol/sugar solution using a rotary evaporator to obtain in total 330 g of syrup of Brix 50.4.

250 ml of 80 Vol% ethanol and 105.3 ml of water were added to 144.7 ml of the above syrup to make it 500 ml in total. This solution was similarly adjusted in ethanol concentration to 40 Vol%, heated to 50°C and allowed to stand for 4 hours at room temperature (23°C) in a 500 ml cylinder. A precipitate was obtained at the bottom of the cylinder, which was recovered similarly as in the case of the pH 12 solution and vacuum dried. It weighed 1.7 g.

This is equivalent to 1.9% of the solid content or 0.45% of 378 g of the stock molasses. In addition, pH 6.0 and pH 7.5 solutions were prepared separately and treated similarly as in the case of the solution of pH 9.0. It was confirmed that the recovery rate was somewhat higher when the solution was more alkaline.

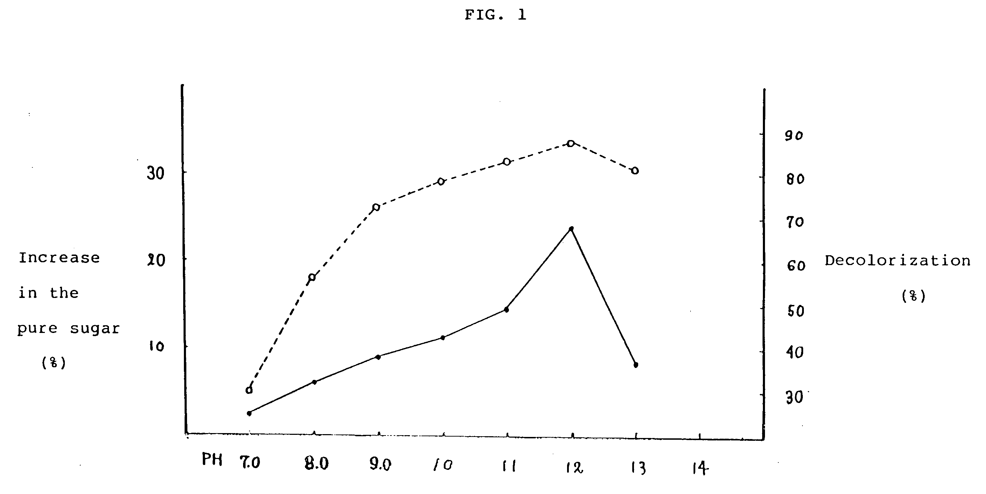

Although the difference is marginal, extraction in a highly alkaline region is desirable since the clarified sugar solution obtained is decolorized more thoroughly when the solution is more alkaline, as shown in FIG. 1.

### Example 2

In order to determine the ethanol concentration of the ethanol/sugar mixture solution at which cane lipid is precipitated the fastest, the following comparative test was performed. First, approximately 1,000 ml of the clarified syrup (Bx 67.0) was prepared in accordance with Example 1; namely, to the solution calcium hydroxide was added to adjust its pH to 12.5, 6 times the above amount of the solution of 80 Vol% ethanol were further added and the mixture filtrated for clarification.

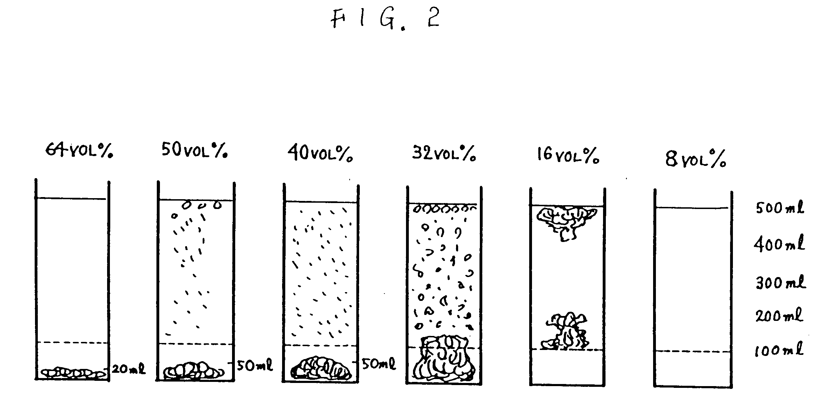

Six samples each weighing 134 g were collected (the solid content = 134 x 0.67 = 90 g) and mixed with ethanol and water so that the ethanol concentrations would be 8 Vol%, 16 Vol%, 32 Vol%, 40 Vol%, 50 Vol% and 64 Vol% respectively. Each was heated again to 50°C, placed in a 500 ml cylinder and allowed to stand at room temperature for 6 hours. The results as shown in FIG. 2 were obtained.

As shown in FIG. 2, the solutions settled in the time-wise order of 64% > 50% > 40% > 32% > 16% > 8%. The 64 Vol% solution settled predominantly fast within 15 minutes while the 8% solution did not precipitate at all.

However, when the filtration velocities were compared in respect of 400 ml each of the supernatants above the 100 ml line of the measuring cylinder using No. 131 filter paper, they were in the order of 32% > 40% > 16% > 50% > 64% > 8%.

As the 64 Vol% solution settled predominantly fast compared to other solutions, its precipitate was suspected to be of different nature from the precipitates of other solutions containing 50% or less of ethanol. The precipitate was added to chloroform but did not dissolve at all.

A part of it was subjected to ashing to reveal that 75% of it was an inorganic substance. Further, the ethanol was totally removed from the supernatant above the 100 ml line of the cylinder containing the 64 Vol% solution by distillation under reduced pressure. The residue was mixed anew with ethanol and water to adjust the ethanol concentration to 35 Vol%. The solution was heated to 50°C and allowed to stand at room temperature. Again a yellowish green or white mushy precipitate settled in the amount substantially comparable to those obtained from other solutions containing 40 Vol% or less of ethanol.

CaO mg/Bx was measured and compared in respect of the ethanol-removed sugar solution obtained from the supernatant processed at 40 Vol% alone and the ethanol-removed sugar solution obtained by processing the solution at two concentrations, i.e. 64 Vol% and 35 Vol%. The value for the former was 6,100 mg/Bx while that for the latter was 880 mg/Bx, revealing that the residual calcium content was different. It was confirmed that recovery by settling in two stages at 60 Vol% and 30 - 40 Vol% is desirable.

### Example 3

270 ml (384.5 g) of cane molasses was prepared, mixed with 242.3 ml of water to obtain 512.3 ml of Bx 50 solution, which was mixed with milk of lime of Bx 14 to adjust its pH to 12.0. The resultant solution was heated to 55°C and mixed with 6 times the above amount (3,073.8 ml) of 80 Vol% ethanol and stirred. A large quantity of precipitate settled immediately, which was filtrated with No. 2 filter paper, and 330 g of sludge was obtained. In order to wash out the residual sugar in the sludge, 500 ml of 60 Vol% ethanol was added, and 254 g of sludge was obtained.

The filtrate initially obtained and the filtrate obtained by the second filtration of the sludge were mixed, carbon dioxide was added to saturation to adjust the pH to 7.5, and filtrated. 2,800 ml of ethanol were removed from the resultant clarified solution (ethanol concentration of 75 Vol%) using a rotary evaporator to adjust the residual ethanol concentration to 35 Vol%, the mixture was placed in a 2,000 ml beaker, heated to 50°C, water cooled to 20°C and allowed to stand. Cane wax started to precipitate and settle in about 4 hours at the bottom of the beaker. The supernatant was gently removed by suction with a rubber tube, and the precipitate at the bottom was filtrated with No. 131 filter paper and vacuum dried, to recover 2.11 g of dry substance, which is equivalent to 0.55% of the stock molasses.

### Example 4

1,010 g of waste molasses was collected from a sugar refinery and mixed with 280.5 ml of water to dilute it to Bx 50 at 1,000 ml. Milk of lime was further added to adjust its pH to 12.0, and the mixture was heated to 55°C, mixed with 6,000 ml of 80 Vol% ethanol and stirred. The precipitate immediately produced was filtrated with No. 2 filter paper, and 852 ml of sludge obtained was mixed with 60 Vol% ethanol in twice the amount of the sludge, stirred and filtrated. The filtrate was mixed with the initial filtrate, and carbon dioxide was added to the mixture to saturation to adjust its pH to 7.5 and filtrated with No. 2 filter paper to obtain a clarified solution. A part of the alcohol contained, 4,000 ml (ethanol concentration 75%), was distilled off using a rotary evaporator to adjust the residual ethanol concentration to 60 Vol%. The resultant solution was allowed to cool, heated again to 50°C and allowed to stand for 30 minutes at room temperature. White crystals precipitated and settled.

After they were isolated by a separatory funnel, the remainder was filtrated with No. 131 filter paper and vacuum dried, to obtain 5.89 g of dry substance, which is equivalent to 3.36% of the solid content. 2,940 ml of ethanol were removed from the supernatant and the filtrate using a rotary evaporator to adjust the ethanol concentration to 35 Vol%, allowed to cool, heated to 50°C and allowed to stand for 5 hours at room temperature. Cane lipid subsequently precipitated and settled, which was filtrated and vacuum dried. It weighed 1.82 g. This is equivalent to 2.02% of the solid content or 0.5% of the stock molasses when calculating from the sample subjected to analysis.

The white precipitate obtained at 60 Vol% was examined, and it was found that the precipitate from waste molasses of this refined sugar was not a calcium salt but a aconitic acid salt.

### Example 5

3,083 ml of waste fermentation liquid (Bx 6) obtained from a yeast factory was condensed to 310 ml (381.3 g) in total to adjust its Bx to 50, which was mixed with milk of lime to adjust its pH to 12.0, heated to 60°C, mixed with 1,860 ml of 80 Vol% ethanol and stirred. The resultant precipitate was filtrated with No. 2 filter paper.

In accordance with Example 3 a clear liquid was obtained by adding carbonic acid to saturation and filtrating. Ethanol was removed by distillation using a rotary evaporator and the mixture condensed to Bx 48.4. It measured 76.7 ml (93.8 g) in total. It was mixed with 189.2 ml of 80 Vol% ethanol to make it 265.9 ml in total and to adjust the ethanol concentration to 90 Vol%, heated to 50°C and allowed to stand at room temperature. This time no precipitate was formed but scum was observed floating on the liquid surface, which was filtrated with No. 131 filter paper and vacuum dried; 3.93 g of dry substance was obtained. This is equivalent to 8.66% of the solid content.

When the filtrate was further condensed to Bx 62.8, it measured 40.6 ml (53.7 g). It was added with 51.9 ml of water and 92.5 ml of 80 Vol% ethanol to make it 185 ml in total and to adjust the ethanol concentration to 40 Vol%, heated to 50°C and allowed to stand at room temperature. Again no precipitate was formed but scum was observed floating on the liquid surface (the lower layer was black in color and transparent). The scum was filtrated with No. 131 filter paper and vacuum dried. It weighed 1.57 g. This is equivalent to 4.71% of the solid content, which means that 0.051% of cane lipid was contained in the total 3,083 ml of Bx 6 stock solution.

### Example 6

25 liters of a mixed juice pressed with a mill was collected from a cane sugar plant, filtrated with wire mesh to remove bagachillo contained and further filtrated with filter cloth to remove suspended particles. A sample measuring 20 liters was condensed to 4-fold concentration using NTU-3,000 membrane (MW 20,000) of Nitto Electric Industrial Co., and 13.8 liters of permeate and 5.2 liters of concentrate were obtained.

900 ml of Bx 50 solution obtained by condensing the above concentrate (Bx 14.84) was prepared, mixed with milk of lime to adjust its pH to 12.0, mixed with 5,400 ml of 80 Vol% ethanol and stirred. The mixture was subjected to treatment as per Example 3 to obtain a clarified concentrate (Bx 59) which contained no ethanol (sample solution). A portion of the sample measuring 97.4 ml was collected, mixed with 5.1 ml of water and 307.5 ml of 80 Vol% ethanol to adjust its ethanol concentration to 60 Vol%, heated to 50°C and allowed to stand at room temperature. A greenish yellow precipitate settled, which was filtrated with No. 131 filter paper and vacuum dried; 6.24 g of dry substance was obtained.

This is equivalent to 8.46% of the solid content or 1.38% of the stock solution. Further, 99.2 ml was collected anew from the initially obtained Bx 59 sample solution, mixed with 109.4 ml of water and 208.6 ml of 80 Vol% ethanol to make it 417.2 ml in total and to adjust the ethanol concentration to 40 Vol%, heated to 50°C and allowed to stand at room temperature. When the precipitate was filtrated with a PTFE membrane and vacuum dried, 0.8 g of cane lipid was obtained. This is equivalent to 1.07% of the solid content or 0.17% of the membrane-condensed stock solution.

## Claims

1. A process of extracting lipid (hereinafter referred to as "cane lipid") from cane molasses comprising the following steps wherein:
(a) alkali is added to cane molasses to adjust its pH between 8.0 and 12.5;
(b) a lower alcohol is added to the mixture to adjust the alcohol concentration in the range of between 85 and 60 Vol% while the mixture is heated to 60°C ± 10°C, and the aggregated precipitate is filtrated to obtain a clarified liquid;
(c) alcohol is removed from the clarified liquid to adjust its alcohol concentration to 50 - 15 Vol%;
(d) said liquid is heated to 45°C ± 10°C and then allowed to stand at 20°C ± 15°C to precipitate cane lipid;
(e) the precipitated cane lipid is recovered by isolation or filtration.

2. The process as claimed in Claim 1 which includes an additional step between steps (b) and (c), wherein alcohol is removed from the clarified liquid obtained in step (b) to adjust the alcohol concentration to 65 - 55 Vol%, the mixture is heated to 45°C ± 10°C, and then allowed to stand at 20°C ± 15°C to precipitate and remove salts from the liquid such as calcium salts and aconitic acid salt.

3. The process as claimed in Claims 1 and 2 wherein carbonic acid is added to a mixture containing the clarified solution obtained in step (b) of Claim 1 and the reprocessed solution of sludge produced in step (b) thereof (clarified liquid obtained by dissolving the aggregated precipitate produced in said step in alcohol and filtrating the same) to saturation to adjust its pH in a neutral or weakly alkaline region and filtrated to obtain a filtrate which is to be used in step (c) of Claim 1.

4. The process as claimed in Claims 1 to 3 wherein the starting material used instead of cane molasses includes the condensed residue obtained by ultrafiltration of waste fermentation liquid of waste molasses or cane molasses from sugar refineries or of pressed cane juice.

## Patentansprüche

1. Verfahren zur Extraktion von Lipid (nachstehend als "Zuckerrohr-Lipid" bezeichnet) aus Zuckerrohr-Molassen, umfassend die folgenden Stufen, wobei:
(a) Alkali zu Zuckerrohr-Molassen zur Einstellung des pH-Wertes zwischen 8,0 und 12,5 zugesetzt wird;
(b) ein niederer Alkohol zu dem Gemisch zur Einstellung der Alkohol-Konzentration im Bereich zwischen 85 und 60 Volumenprozent zugesetzt wird, während das Gemisch auf 60 ± 10°C erhitzt wird, und der aggregierte Niederschlag abfiltriert wird, so daß eine geklärte Flüssigkeit erhalten wird;
(c) Alkohol aus der geklärten Flüssigkeit entfernt wird, um ihre Alkohol-Konzentration auf 50 bis 15 Volumenprozent einzustellen;
(d) die Flüssigkeit auf 45 ± 10°C erwärmt und dann bei 20 ± 15°C stehengelassen wird, um Zuckerrohr-Lipid auszufällen;
(e) das ausgefällte Zuckerrohr-Lipid durch Isolierung oder Filtration gewonnen wird.

2. Verfahren nach Anspruch 1, welches eine zusätzliche Stufe zwischen den Stufen (b) und (c) einschließt, in der Alkohol von der in Stufe (b) erhaltenen geklärten Flüssigkeit entfernt wird, um die Alkohol-Konzentration auf 65 bis 55 Volumenprozent einzustellen, das Gemisch auf 45 ± 10°C erwärmt und dann bei 20 ± 15°C stehengelassen wird, um Salze, wie Calciumsalze und Aconitsäuresalze aus der Flüssigkeit auszufällen und zu entfernen.

3. Verfahren nach den Ansprüchen 1 und 2, wobei Kohlensäure bis zur Sättigung zu einem Gemisch zugesetzt wird, das die in Stufe (b) von Anspruch 1 erhaltene geklärte Lösung und die aufgearbeitete Lösung des in Stufe (b) erzeugten Schlamms enthält (geklärte Flüssigkeit, die durch Lösen des in dieser Stufe erzeugten aggregierten Niederschlags in Alkohol und Filtration derselben erhalten wird), um ihren pH-Wert im neutralen oder schwach alkalischen Bereich einzustellen und das Gemisch filtriert wird, um ein Filtrat zu erhalten, das in Stufe (c) von Anspruch 1 verwendet wird.

4. Verfahren nach Anspruch 1 bis 3, wobei das anstelle von Zuckerrohr-Molassen verwendete Ausgangsmaterial den eingedickten Rückstand umfaßt, der durch Ultrafiltration von flüssigem Fermentations-Abfall, von Abfall-Molassen oder Zuckerrohr-Molassen aus Zucker-Raffinerien oder von ausgepreßtem Zuckerrohr-Saft erhalten wird.

## Revendications

1. Un procédé d'extraction des lipides ci-après dénommés ("lipides de canne") de la mélasse de canne comprenant les étapes suivantes dans lesquelles :
(a) on ajoute de l'alcali à la mélasse de canne pour ajuster son pH entre 8,0 et 12,5 ;
(b) on ajoute un alcool inférieur au mélange pour ajuster la concentration en alcool entre 85 et 60% en volume, en chauffant le mélange à 60 ± 10°C, et on filtre le précipité aggloméré pour obtenir un liquide clarifié ;
(c) on sépare l'alcool du liquide clarifié pour ajuster sa concentration en alcool à 50-15% en volume ;
(d) on chauffe ce liquide à 45 ± 10°C et ensuite on le laisse reposer à 20 ± 15°C pour précipiter les lipides de canne ;
(e) on récupère par isolement ou filtration les lipides de canne précipités.

2. Le procédé selon la revendication 1, qui comprend entre les étapes (b) et (c) une étape supplémentaire dans laquelle on sépare l'alcool du liquide clarifié obtenu dans l'étape (b) pour ajuster la concentration en alcool à 65-55% en volume, on chauffe le mélange à 45 ± 10°C et ensuite on laisse reposer à 20 ± 15°C pour précipiter et séparer du liquide les sels tels que sels de calcium et sels d'acide aconitique.

3. Le procédé selon les revendications 1 et 2, dans lequel on ajoute de l'acide carbonique jusqu'à saturation à un mélange contenant la solution clarifiée obtenue dans l'étape (b) de la revendication 1 et la solution de retraitement de la boue produite dans l'étape (b) dudit procédé (liquide clarifié obtenu en dissolvant dans l'alcool le précipité aggloméré produit dans ladite étape et en le filtrant) pour ajuster son pH dans une région neutre ou faiblement alcaline et on filtre pour obtenir un filtrat à utiliser dans l'étape (c) de la revendication 1.

4. Le procédé selon les revendications 1 à 3, dans lequel le produit de départ utilisé au lieu de mélasse de canne comprend le résidu concentré obtenu par ultrafiltration du liquide de fermentation résiduaire de mélasse résiduaire ou de mélasse de canne de raffineries de sucre ou de jus de canne pressée.
